(19) Europäisches Patentamt
European Patent Office
Office européen des brevets

(11) Publication number: **0 200 222**
**A2**

(12) # EUROPEAN PATENT APPLICATION

(21) Application number: 86105965.7

(22) Date of filing: 30.04.86

(51) Int. Cl.⁴: **G 06 F 15/20**

(30) Priority: 01.05.85 US 729308

(43) Date of publication of application:
05.11.86 Bulletin 86/45

(84) Designated Contracting States:
DE FR GB

(71) Applicant: Minolta Camera Kabushiki Kaisha
Osaka Kokusai Building 30, Azuchi-machi 2-chome
Higashi-ku Osaka 541(JP)

(72) Inventor: Johnson, Theodore C.
666 Main St. No. 204
Winchester Massachusetts(US)

(72) Inventor: Dunn III, Thomas E.
422 Highland Ave.
Winchester Massachusetts(US)

(74) Representative: Glawe, Delfs, Moll & Partner
Patentanwälte
Postfach 26 01 62 Liebherrstrasse 20
D-8000 München 26(DE)

(54) **Word processor with automatic typewriter mode.**

(57) A word processor (K) capable of functioning also as a typewriter and including a key input unit (11), an image storage unit (3) for storing image data, an image display unit (5) for displaying the image data, a storage unit (2) for storing data inputted to the key input unit (11), and a control and storage unit (1) for storing a control program of the word processor (K). The control and storage unit (1) includes a control device for effecting input/output control of the word processor (K) in a typewriter mode and the key input (11) includes a typewriter mode setting key and a typewriter mode stop key, while the storage unit (2) includes first and second storage areas (23, 22) for storing the data inputted to the key input unit (11) in a word processor mode and the typewriter mode, respectively.

Fig. 2

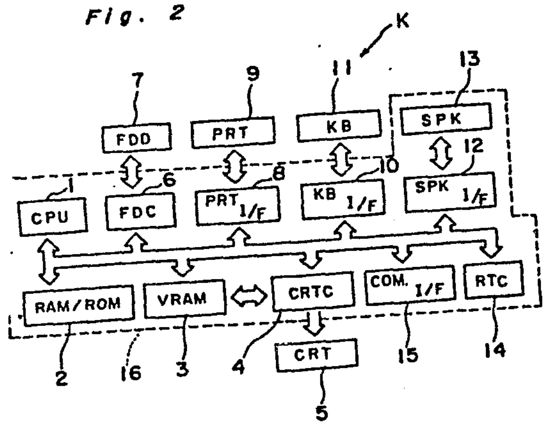


EP 0 200 222 A2

WORD PROCESSOR WITH AUTOMATIC TYPEWRITER MODE

## BACKGROUND OF THE INVENTION

The present invention generally relates to word processors and more particularly, to a word processor capable of being used also as a typewriter. It is to be noted here that the term "word processor" represents an apparatus in which documents inputted from a keyboard are temporarily stored in a memory and are printed out after their correction, edition, etc., while the term "typewriter" represents a so-called electronic typewriter.

Conventionally, in alphanumeric word processors each provided with a printer of a type impact system such as a daisy wheel printer, etc., the word processors each have versatile applications if the word processors each can be used as an electronic typewriter through utilization of functions of the printer. Namely, if only typing can be performed in the word processors immediately without the need for performing many operations for manipulating each of the word processors as a word processor, the word processors can be used more conveniently. However, the known word processors have such a drawback that if an interruption is triggered during operation of each of the known word processors as the word processor, i.e., in a word processor mode so as to set each of the known word processors to a typewriter mode, operational states of the known word processors regarding screen display, cursor position, tabulation setting, etc. at the time of the interruption are erased when the known word processors are reset to the word processor mode. Consequently, since the known word processors cannot be restored to their operational states assumed at the time of the interruption when the known word processors each are started to be used as the word processor, it becomes necessary to again perform operations for restoring the known word processors to their operational states assumed at the time of the interruption.

On the other hand, the known word processors have such a disadvantage that if typing is performed after completion of operation of each of the known word processors as the word processor in order to avoid the above described drawback due to the interruption, an unnecessary waiting time is required to be spent, thereby resulting in ineffective utilization of the known word processors each functioning also as the typewriter.

SUMMARY OF THE INVENTION

Accordingly, an essential object of the present invention is to provide an improved word processor functioning not only as a word processor but as a typewriter, in which an interruption is triggered during operation of the word processor as the word processor, i.e., in a word processor mode, so as to operate the word processor as a typewriter, i.e., in a typewriter mode, and then, operational states of the word processor just prior to the interruption are immediately restored upon resetting of the word processor to the word processor mode after completion of operation of the word processor in the typewriter mode.

In order to accomplish this object of the present invention, a word processor according to the present invention comprises: a key input means for inputting characters or the like thereto; an image storage means for storing image data; an image display means for displaying said image data stored in said image storage means; a storage means for storing and processing data of the characters or the like inputted to said key input means; a control and storage means for storing a program for controlling both input of the characters or the like from said key input means thereto and output of said image data therefrom to said image storage means; said control and storage means including a control means for effecting input/output control of said word processor in a typewriter mode in which said word processor functions as a typewriter; said key input means including a typewriter mode setting means for giving a command of setting said word processor to said typewriter mode and a typewriter mode stop means for giving a command of terminating said typewriter mode; said storage means including a first character data storage means for storing the characters or the like inputted to said key input means in a word processor mode in which said word processor functions as a word processing apparatus, a second character storage means for storing the characters or the like input to said key input means in said typewriter mode and a stack storage means; a transfer control means which, when said command setting said word processor to said typewriter mode has been given by said typewriter mode setting means, transfers a portion of the contents of said second caracter storage means to said image storage means and transfers processing states of said word processor to said stack storage means; and a retransfer control means which, when said command of terminating said typewriter mode has been given by said typewriter mode stop means, transfers contents of said first character storage means to said image storage means and retransfers the contents of said stack storage means to said control and storage means.

In accordance with the present invention, an interruption can be triggered during operation of the word processor in the word processor mode so as to temporarily use the word processor as the typewriter.

Meanwhile, in accordance with the present invention, since the word processor can be immediately restored to operational states of the word processor mode upon completion of operation of the word processor in the typewriter mode, operation of the word processor in the word processor mode can be resumed immediately.

Consequently, in accordance with the present invention, the word processor functioning not only as the word processor but as the typewriter can be operated remarkably efficiently and reliably.

## BRIEF DESCRIPTION OF THE DRAWINGS

The object and features of the present invention will become apparent from the following description taken in conjunction with the preferred embodiment thereof with reference to the accompanying drawings, in which:

Fig. 1 is a flow chart showing processing of conversion between a word processor mode and a typewriter mode in a word processor (Fig. 2) according to the present invention;

Fig. 2 is a block diagram showing configuration of the word processor according to the present invention; and

Fig. 3 is a diagram showing a map of a main memory employed in the word processor of Fig. 2.

Before the description of the present invention proceeds, it is to be noted that like parts are designated by like reference numerals throughout several views of the accompanying drawings.

## DETAILED DESCRIPTION OF THE INVENTION

Hereinbelow, a word processor K according to the present invention will be described with reference to Figs. 1 to 3.

(a) Configuration of Word Processor

Fig. 2 shows overall configuration of the word processor K. The word processor K includes a central processing unit (CPU) 1 for controlling the word processor K as a whole, a main memory 2 and a storage area (hereinbelow, referred to as a "VRAM") 3 for storing a display dot pattern to be displayed on a display unit (CRT) 5. The CPU 1 executes various operations in accordance with commands of programs stored in the main memory 2. Meanwhile, the main memory 2 is composed of a read-only memory (ROM) and a random access memory (RAM) and includes a storage area for storing the programs read from a floppy disk, a storage area for storing document data regarding documents being produced or edited, a save area for saving the contents of the VRAM 3, etc.

The word processor K further includes a display control unit (CRTC) 4, a floppy disk controller (FDC) 6, a floppy disk drive (FDD) 7, a printer (PRT) 9 acting as an output device and an interface (PRT I/F) 8 for the printer 9. The display control unit 4 effects output control of a display signal of the display unit 5 in accordance with the contents of the VRAM 3 and outputs the display signal to the display unit 5 so as to display the contents of the VRAM 3 on the display unit 5. The floppy disk drive 7 and the printer 9 are connected to the CPU 1 through the floppy disk controller 6 and the interface 8, respectively.

Furthermore, the word processor K includes a keyboard (KB) 11 acting as an input device, an interface (KB I/F) 10 for the keyboard 11, a loudspeaker (SPK) 13 and an interface (SPK I/F) 12 for the loudspeaker 13. The keyboard 11 and the loudspeaker 13 are connected to the CPU 1 via the interfaces 10 and 12, respectively.

Moreover, the word processor K includes a clock (RTC) 14 and a common interface (COM. I/F) 15 which are connected to the CPU 1. It should be noted that units 1 to 4, 6, 8, 10 and 12 to 15 disposed inside broken lines of Fig. 2 constitute a computer 16 for controlling the word processor K.

Fig. 3 shows partially a map of the main memory 2, which includes a typewriter mode program 20 to be executed in the typewriter mode, a word processor mode program 21 to be executed in the word processor mode, a character data storage area 22 of the typewriter mode and a character data storage area 23 of the word processor mode. The map of the main memory 2 further includes a stack 24 for saving a program counter and registers of the CPU 1. When an interruption is triggered during operation of the word processor K in the word processor mode, the stack 24 saves and stores therein the contents of the registers of CPU 1 including the program counter register (PCR).

(b) Processing at the Time of Interruption of Typewriter Mode

Processing of the word processor K at the time of its changeover from the word processor mode to the typewriter mode, which is an essential characteristic of the present invention, will be described with reference to a flowchart of Fig. 1, hereinbelow. As described earlier, when the word processor K is reset to the word processor mode, the word processor K should be restored to its operational states assumed prior to the interrruption. As shown in Fig. 1. when a key input is applied to the keyboard 11 at step P1 in a waiting state for waiting for the key input to the keyboard 11 during operation of the keyboard 11 in the word processor mode, a decision is made at step P2 as to whether or not a typewriter mode setting key for setting the word processor K to the typewriter mode has been depressed. In the case of "NO" at step P2, ordinary input/output processing of the word processor K in the word processor mode is performed at step P3 followed by step P1 for waiting for a next key input to the keyboard 11.

Meanwhile, in the case of "YES" at step P2, the contents of the VRAM 3 are initially set to the contents of the character data storage area 22 of the typewriter mode of the main memory 2 at step P10. Subsequently, the contents of the CPU 1, i. e., an address (i-th address) of the program counter register at the time of depression of the typewriter mode setting key in the stack 24 of the main memory 2 at step P11 and then, the contents of the registers of the CPU 1 are stored in the stack 24 at step P12. A heading address (j-th address) of the typewriter mode program 20 is transferred to the program counter register at step P13. As a result, since an execution area of the program moves to the typewriter mode program 20, it becomes possible to use the word processor K as the typewriter.

Thereafter, ordinary input/output processing of the word processor K in the typewriter mode is performed at step 20. Character data in the typewriter mode are stored in the character data storage area 22. Then, a key input is applied to the keyboard 11 at step P21 in the waiting state for waiting for the key input to the keyboard 11 and a decision is made at step P22 as to whether or not a typewriter mode stop key for terminating the typewriter mode has been depressed. In the case of "NO" at step P22, the program flow returns to step P20. Meanwhile, in the case of "YES" at step P22, the contents of the registers of the CPU 1 at the time of interruption, which are stored in the stack 24, are transferred to the registers of the CPU 1 at step P30 and the contents (i-th address) of the program counter register of the CPU 1 at the time of the interruption, which are stored in the stack 24, are transferred to the program counter register at step P3 and the contents of the character data storage area 22 of the word processor mode are returned to the VRAM 3 at step P32 and a picture of the word processor mode, which was subjected to the interruption of the typewriter mode is displayed on the display unit 5. As a result, since an execution area of the program moves to the interrupted position (i-th address) of the word processor mode program 21, states of the word processor mode subjected to the inter--ruption, such as the image display, cursor position, tabulation setting, etc. are restored and thus, it becomes possible to use the word processor K as the word processor.

As is clear from the foregoing description, in the word processor of the present invention, the typewriter mode program is used as one subroutine of the word processor mode program. Namely, when an interruption is triggered during operation of the word processor as the word processor so as to set the word processor to the typewriter mode, the subroutine to the typewriter mode is executed. At this time, the contents of the registers of the CPU 1 are saved in the stack 24 of the main memory 2 and the contents of the VRAM 3 are initialized from the contents of the character data storage area 22 of the typewriter mode of the main memory 2. Furthermore, the character data storage area 22 of the typewriter mode occupies, in the main memory 2, an area different from that of the character data storage area 23 of the word processor mode.

Consequently, in accordance with the present invention, it becomes possible not only to effect changeover of the word processor between the word processor mode and the typewriter mode but to completely restore the states of the word processor mode subjected to the interruption of the typewriter mode.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as being included therein.

What is claimed is:

1. A word processor (K) comprising:

a key input means (11) for inputting characters or the like thereto;

an image storage means (3) for storing image data;

an image display means (5) for displaying said image data stored in said image storage means (3);

a storage means (2) for storing the characters input by said key input means (11) and data necessary for the processing of the characters;

a control and storage means (1) for storing a program for controlling both input of the characters or the like from said key input means (11) thereto and output of said image data therefrom to said image storage means (3), said control and storage means (1) including a control means for effecting input/output control of said word processor (K) in a typewriter mode in which said word processor (K) functions as a typewriter;

said key input means (11) including a typewriter mode setting means for giving a command of setting said word processor (K) to said typewriter mode and a typewriter mode stop means for giving a command of terminating said typewriter mode;

said storage means (2) including a first character data storage means (23) for storing the characters or the like input by said key input means (11) in a word processor mode in which said word processor (K) functions as a word processing apparatus, a second character storage means (22) for storing the characters or the like input by said key input means (11) in said typewriter mode and a stack storage means (24);

a transfer control means which, when said command of setting said word processor (K) to said typewriter mode has been given by said typewriter mode setting means, transfers a portion of the contents of said second character storage means (22) to said image storage means (3) and transfers processing states of said word processor (K) to said stack storage means (24); and

a retransfer control means which, when said command of terminating said typewriter mode has been given by said typewriter mode stop means, transfers contents of said first character storage means (23) to said image storage means (3) and retransfers the contents of said stack storage means (24) to said control and storage means (1).

2. A word processor as claimed in Claim 1, wherein said storage means (2) further includes a first storage means (21) for storing a word processor mode program to be executed in said word processor mode and a second program storage means (20) for storing a typewriter mode program to be executed in said typewriter mode.

3. A word processor as claimed in Claim 2, wherein said typewriter mode program is used as one subroutine of said word processor mode.

4. In an improved word processor system (K) having a printer (9), an image display (5), a keyboard (11), a word processing program, memory means (2) for storing a program to enable a word processing mode of operation, means (1) for executing the program and means for storing and processing the input of the keyboard (11) to permit display, revision and editing of the text on the image display (5) by the word processing program before providing a copy of the display from the printer (9), the improvement comprising:

a typewriter mode setting means permanently positioned on the keyboard (11) for giving a command to automatically terminate a word processing mode of operation and enable the keyboard (11) and printer (9) in an automatic electric typewriter mode of operation; and

a typewriter mode stopping means permanently positioned on the keyboard (11) for giving a command to terminate the typewriter mode of operation and to restore the word processing mode of operation to the exact position that had existed when it was automatically terminated by the typewriter mode setting means whereby an operator can subjectively switch from a word processing mode of operation directly to a typewriter mode of operation and vice versa by simply striking a key on the keyboard (11).

5. The invention of Claim 4 wherein the memory means includes an image storage means (3), a first character data storage means (23) for storing the characters or the like input by the keyboard (11) in a word processor mode in which the word processor (K) functions as a word processing apparatus, a second character storage means (22) for storing the characters or the like input by the keyboard (11) in the typewriter mode, and a stack storage means (24); a transfer control means which, when the command of setting the word processor (K) to the typewriter mode has been given by the typewriter mode setting means, transfers a portion of the contents of the second character storage means (22) to image storage means (3) and transfers processing states of the word processor (K) to the stack storage means (25); and a retransfer control means which, when said command of terminating the typewriter mode has been given by the typewriter mode stop means, transfers contents of the first character storage means (23) to the image storage means (3) and retransfers the contents of the stack storage means (24) to the means (1) for executing a program.

6. The invention of Claim 5, wherein the storage means (2) further includes a first program storage means (21) for storing a word processor mode program to be executed in the word processor mode and a second program storage means (20) for storing a typewriter mode program to be executed in the typewriter mode.

7. The invention of Claim 6, wherein the typewriter mode program is used as one subroutine of the word processor mode.

1/3 0200222

Fig. 1

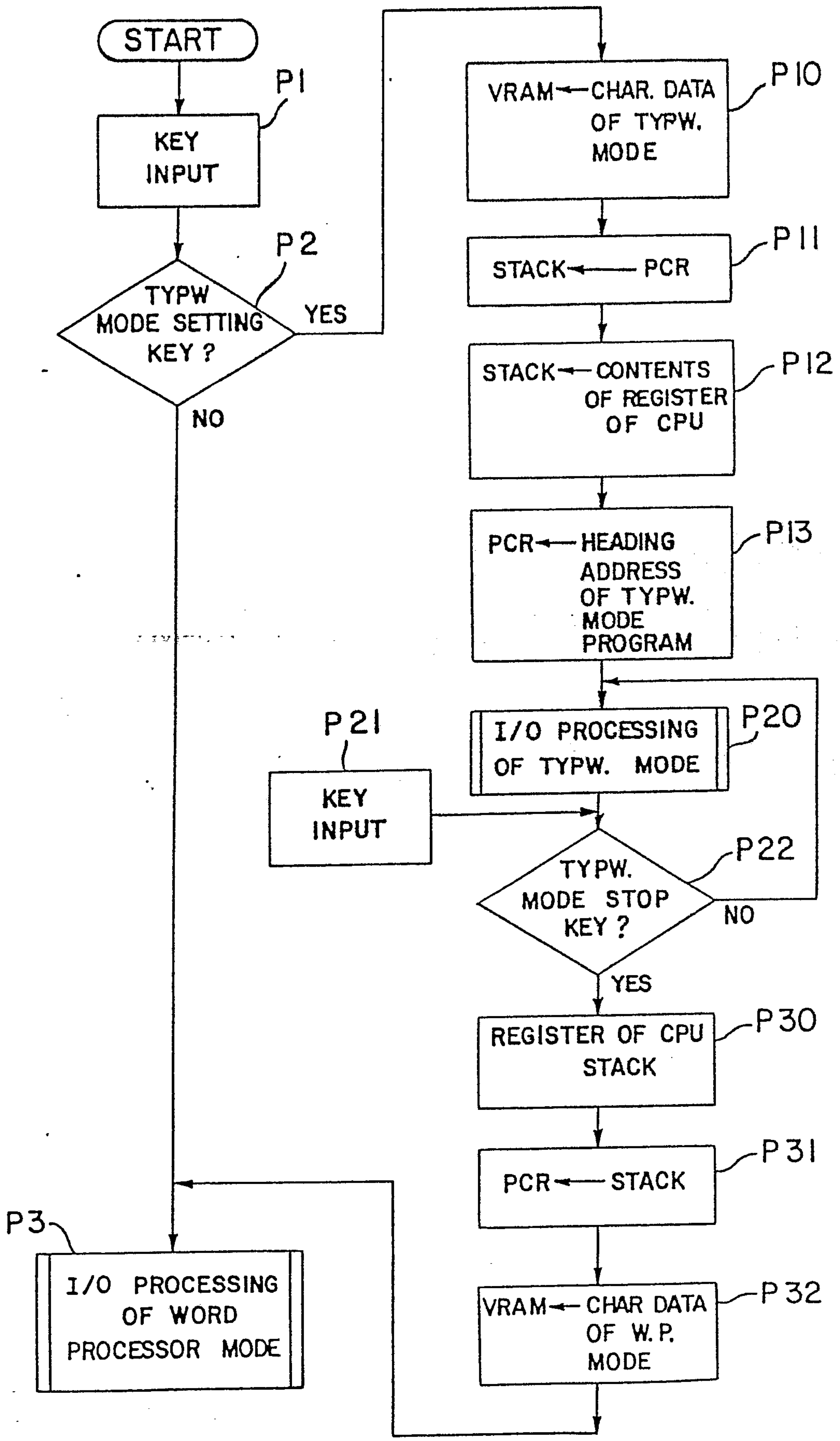

0200222

2/3

Fig. 2

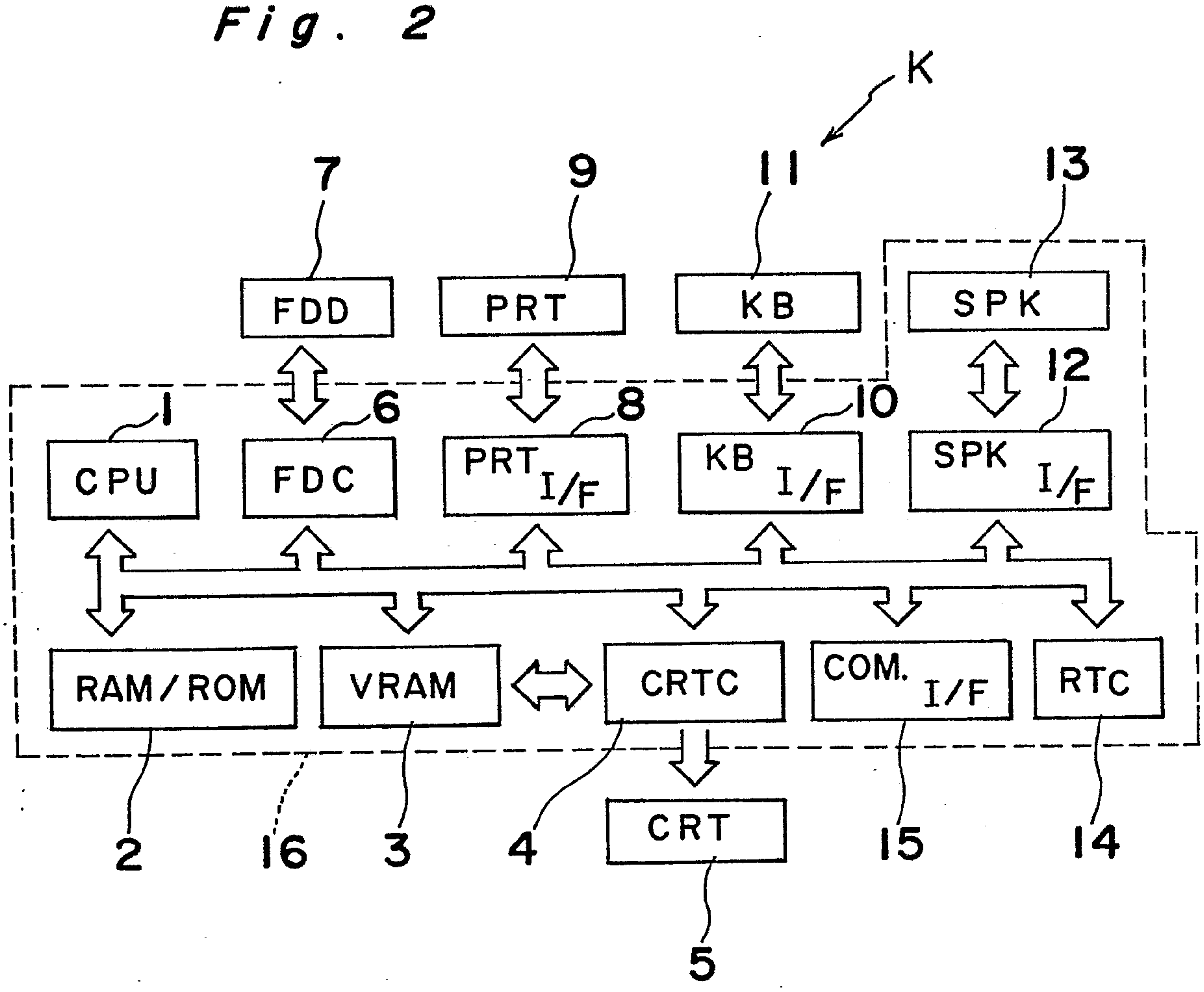

Fig. 3

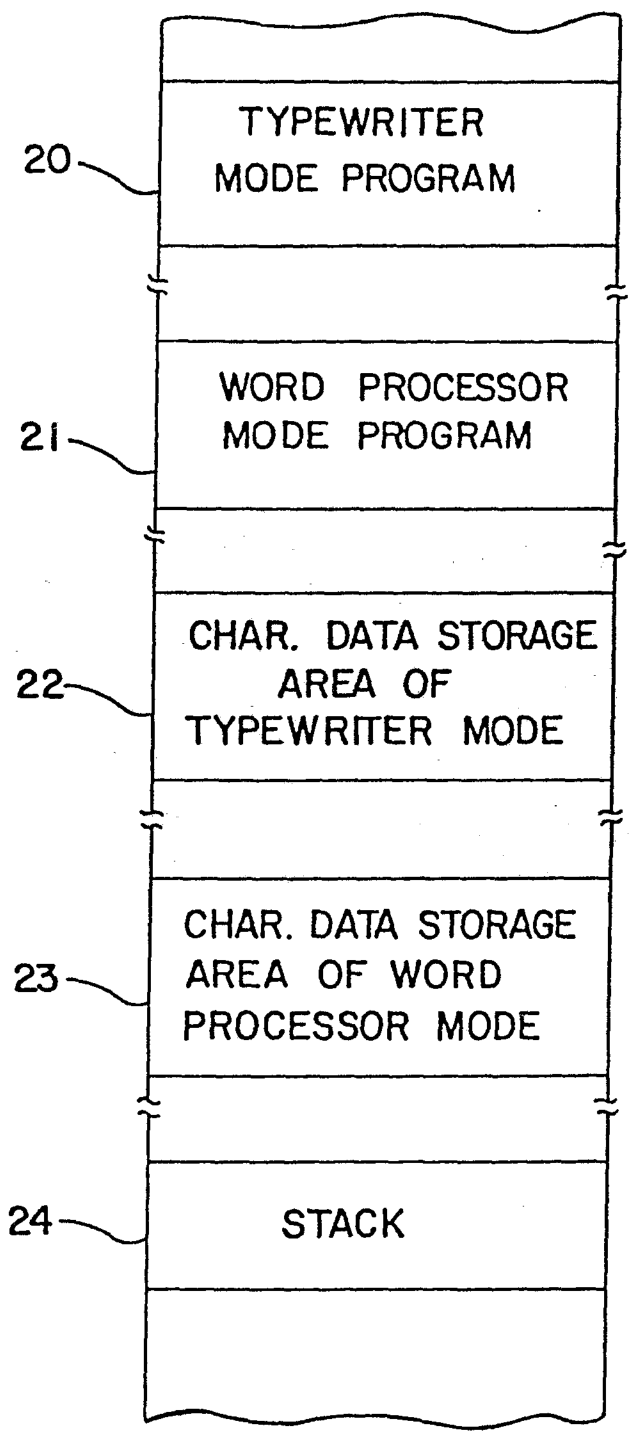
TYPEWRITER MODE PROGRAM
20
WORD PROCESSOR MODE PROGRAM
21
CHAR. DATA STORAGE AREA OF TYPEWRITER MODE
22
CHAR. DATA STORAGE AREA OF WORD PROCESSOR MODE
23
STACK
24